# EUROPÄISCHE PATENTSCHRIFT

(11) **EP 2 117 893 B1**
(45) Veröffentlichungstag und Bekanntmachung des Hinweises auf die Patenterteilung: **31.07.2013**
(21) Anmeldenummer: 07857466.2
(22) Anmeldetag: 12.12.2007
(51) Int. Cl.: B60S 1/40

(54) **SCHEIBENWISCHVORRICHTUNG MIT EINER VERBESSERTEN WISCHERAUFNAHME**
WINDOW WIPER DEVICE WITH AN IMPROVED WIPER RECEPTACLE
DISPOSITIF ESSUIE-GLACE AVEC UN SUPPORT D'ESSUIE-GLACE AMÉLIORÉ

(30) Priorität: 29.12.2006 DE 102006062004
(43) Veröffentlichungstag der Anmeldung: 18.11.2009
(73) Patentinhaber: Robert Bosch GmbH, 70442 Stuttgart (DE)
(72) Erfinder: KNAUF, Richard, F-67480 Roppenheim (FR)
(86) Internationale Anmeldenummer: PCT/EP2007/063803
(87) Internationale Veröffentlichungsnummer: WO 2008/080785

(56) Entgegenhaltungen:
- EP-A- 1 462 327
- DE-A1- 4 229 127

## Beschreibung

Die vorliegende Erfindung betrifft eine Scheibenwischvorrichtung, vorzugsweise für eine Heckscheibe eines Kraftfahrzeugs, mit einem Wischarm, welcher eine Wischbewegung über einer Scheibe des Kraftfahrzeugs ausführt und an dem ein Wischer mittels einer Wischeraufnahme aufgenommen ist, die endseitig am Wischarm ausgebildet ist, wobei die Wischeraufnahme mit einem am Wischer ausgebildeten Aufnahmesteg zusammenwirkt. Insbesondere betrifft die Erfindung eine verbesserte Wischeraufnahme für einen mittels eines Klipsvorgangs oder Einschnappvorgangs zu befestigenden Wischer.

### Stand der Technik

Allgemein bekannt sind Wischeraufnahmen für die Aufnahme von Wischern, welche auf einer Klips- bzw. Einschnappverbindung beruhen. Für Frontscheibenwischer werden vorzugsweise aus Metall gefertigte Wischarme verwendet, welche endseitig umgebogen sind, um eine Einschnapp-Verbindung mit einer entsprechenden Geometrie am Wischer selbst zu schaffen. Die Verbindung am Wischer ist über einen Aufnahmesteg vorgesehen, so dass sich der Wischer in der Wischeraufnahme innerhalb eines begrenzten Winkelbereichs verdrehen kann. Aus Kostengründen und aus Gründen der verringerten Sicherheitsanforderungen und der geringeren aerodynamischen Belastung werden Heckscheibenwischer häufig aus Kunststoff gefertigt, welche einen aus Kunststoff gefertigten Wischarm mit einer ebenfalls aus Kunststoff und an diesem angeformten Wischeraufnahme hergestellt sind. Diese werden als Kunststoff-Spritzgussbauteile ausgebildet, und nehmen auf einfache Weise den Wischer auf. Dabei erstreckt sich ein unterer Teil des Wischers in den U-profilartigen Wischarm, wobei der obere Teil des Wischers aus dem Wischarm herausragt.

Auch bei der Ausführung der Wischarme aus einem Kunststoftbauteil wie beispielsweise aus der EP 1 462 327 bekannt wird die Ausführung der Wischeraufnahme mit einem Aufnahmesteg umgesetzt, welcher im Wischer selbst eingebracht ist. Der Aufnahmesteg ist dabei in eine Schnappverbindung innerhalb der Wischeraufnahme einschnappbar. Wird der Wischarm von der Heckscheibe des Kraftfahrzeugs abgehoben, so kann der Wischer durch eine auf die Wischeraufnahme auszuübende Trennkraft aus der Klipsverbindung getrennt werden, wobei beim Einsetzen des Wischers eine gewisse Kraft erforderlich ist, um die Schnapp- bzw. Klipsverbindung des Aufnahmesteges im Wischer mit der Klipsgeometrie innerhalb der Wischeraufnahme zu schließen.

Bei einer derartigen Ausführung einer Wischeraufnahme, welche aus Kunststoff hergestellt ist, und in die ein Aufnahmesteg eingeklipst werden muss, entsteht das Problem, dass sämtliche Kräfte, die auf den Wischer wirken, über die Klipsverbindung in den Wischarm übergeleitet werden müssen. Die Kräfte können insbesondere dann besonders ansteigen, wenn die Heckscheibe mit Schnee bedeckt ist oder sogar vereist ist. Bei Betätigung der Scheibenwischvorrichtung wirken daher die Kräfte unter einem Hebeleffekt auf den Aufnahmesteg, welcher zu einem Bruch der Klipsverbindung innerhalb der Wischeraufnahme führen können, was zu einem Versagen der Scheibenwischvorrichtung führt. Bei einer verstärkten Ausführung der Klipsverbindung zur Übertragung größerer Kräfte entsteht jedoch zunehmend das Problem, dass die auftretenden Klipskräfte so groß werden, dass diese nicht mehr auf einfache Weise geschlossen bzw. getrennt werden kann. Die Klips- bzw. Schnappverbindung beruht auf dem Prinzip der mit einem geometrischen Hinterschnitt ausgeführten Verbindungsschnapper, welche bei einer Ausführung mit einem größeren tragenden Querschnitt folglich höhere Betätigungskräfte erfordern. Diese Kräfte können bei einer entsprechend verstärkten Ausführung der Verbindung zur Übertragung großer Kräfte Größenordnungen annehmen, so dass diese nicht mehr manuell geschlossen bzw. getrennt werden können. Der Aufbau des in der EP 1 462 327 B1 gezeigten Halte- und Führungseinrichtung ist zudem sehr komplex.

Es ist daher die Aufgabe der vorliegenden Erfindung, eine Scheibenwischvorrichtung zu schaffen, welche bei einer mit geringen Kräften zu betätigenden Schnappverbindung zusätzlich große Wischkräfte übertragen kann.

### Offenbarung der Erfindung

Diese Aufgabe wird ausgehend von einer Scheibenwischvorrichtung gemäß dem Oberbegriff des Anspruches 1 in Verbindung mit dessen kennzeichnenden Merkmalen gelöst. Vorteilhafte Weiterbildungen der Erfindung sind in den abhängigen Ansprüchen angegeben.

Die Erfindung schließt die technische Lehre ein, dass die Wischeraufnahme wenigstens eine Schnapperanformung zum Einschnappen des Aufnahmesteges und von der Schnapperanformung räumlich getrennte Führungsanformungen zur Übertragung der Wischerkräfte auf den Wischarm aufweist.

Der Vorteil der erfindungsgemäßen Ausgestaltung der Wischeraufnahme liegt in der geometrischen Trennung der Führungsanformungen bezogen auf die Schnapperanformung. Die Schnapperanformung kann in ihrer Steifigkeit und ihrer Dimensionierung derart geschaffen sein, dass die gewünschten Einschnappkräfte zum Einschnappen des Aufnahmesteges am Wischer in die Wischeraufnahme entstehen. Diese können unabhängig von der insgesamt auf den Wischer wirkenden Kräfte und damit die auf den Wischarm zu übertragenden Kräfte konstruktiv ausgestaltet werden. Die Führungsanformungen sind geometrisch getrennt von den Schnapperanformungen ausgebildet, und nehmen sämtliche Kräfte auf, die durch den Aufnahmesteg auf die Wischeraufnahme wirken. Folglich besteht die Möglichkeit, die Führungsanformungen entsprechend steif auszuführen, um eine Übertragung großer Wischkräfte zu ermöglichen. Durch die Hebelwirkung des in seiner Längserstreckung vergleichsweise großen Wischers auf den in der Längserstreckung vergleichsweise kleinen Aufnahmesteg können die entstehenden Kräfte in die Führungsanformungen eingeleitet werden, welche folglich nicht zugleich als Schnapperanformungen verwendet werden.

Erfindungsgemäße Scheibenwischvorrichtung weist eine Außenkontur auf, die durch eine rahmenartige Wandung gebildet ist, welche die Wischeraufnahme selbst begrenzt, wobei die rahmenartige Wandung sich gegenüberliegende taschenartige Durchbrüche aufweist, so dass diese im Bereich der Durchbrüche die Führungsanformungen bilden. Diese sind in Gestalt von U-förmigen Aussparungen in der Wandung ausgeführt, so dass der Aufnahmesteg aus Richtung der Aufnahmeseite der Wischeraufnahme in die U-förmigen Durchbrüche eingeführt werden kann. Diese können eine Breite aufweisen, die dem Durchmesser des Aufnahmestegs entspricht, wobei sogar eine leichte Klemmung gebildet werden kann, um ein auch während eines längeren Gebrauchs der Scheibenwischvorrichtung sich bildendes Spiel zu unterbinden. Ferner kann die rahmenartige Wandung der Wischeraufnahme eine vergrößerte Wandstärke aufweisen, welche die Übertragung größerer Kräfte ermöglicht.

Vorteilhafterweise sind wenigstens eine und bevorzugt zwei Schnapperanformungen zwischen den Führungsanformungen angeordnet. Die Schnappgeometrie muss dabei mit den taschenartigen Durchbrüchen fluchten, so dass der Aufnahmesteg, welcher sich in Richtung seiner Stegachse erstreckt, sowohl in die taschenartigen Durchbrüche eingeführt als auch in die Schnappgeometrie der Schnappanformungen einschnappen kann. Es kann entweder eine einzige Schnappanformung vorgesehen sein, welche sich vorzugsweise mittig zwischen den sich gegenüberliegenden Wandungen erstreckt, wobei auch zwei oder mehrere Schnappanformungen eine mögliche Ausführungsform bietet.

Gemäß einer vorteilhaften Ausführung der Schnappanformungen umfassen diese eine mit Hinterschneidungen ausgebildete Aufnahmegeometrie, so dass der Aufnahmesteg im eingeschnappten Zustand von der Aufnahmegeometrie von über 180° umschlossen ist, um einen Halteeffekt zu erzielen. Der Aufnahmesteg weist eine Zylinderform auf, wobei die Schnappgeometrie der Schnappanformungen eine schlüssellochartige Kontur aufweist. Wird der zylinderförmige Aufnahmesteg in die Zuführöffnung der schlüssellochartigen Schnappanformung gefiihrt, so muss dieser bei Überwindung einer Einschnappkraft in die zylinderartige Aufnahmegeometrie der Schnappanformung eingedrückt werden, so dass im eingeschnappten Zustand der zylinderförmige Aufnahmesteg mit einem Umschließungswinkel vom mehr als 180° innerhalb der Geometrie gehalten wird.

Um eine für den Schnappvorgang erforderliche Beweglichkeit der Schnappanformungen zu schaffen, sind diese einseitig und elastisch beweglich an der Wischeraufnahme angebunden, wobei die elastische Beweglichkeit durch mittels die Schnappanformungen freigebende Einschneidungen geschaffen ist. Die Schnappanformungen sind durch die Einschneidungen in Form von ständerartigen oder hebelartigen Schnappfingern ausgeführt, welche bei Einschnappen des Aufnahmesteges die Wipp-Bewegung ausführen können, was durch hinter den Schnappanformungen vorgesehene Einschneidungen möglich gemacht ist.

Eine vorteilhafte Ausführungsform der Scheibenwischvorrichtung ist dadurch gegeben, dass der Wischarm und die Wischeraufnahme einstückig miteinander ausgebildet sind. Ferner sind die Schnappanformungen und die Führungsanformungen mit der Wischeraufnahme selbst einstückig ausgebildet. Dabei ist es von besonderem Vorteil, dass die Einheit aus Wischarm, Wischeraufnahme, Schnappanformung und Führungsanformung mittels eines Spritzgussverfahrens hergestellt ist. Die geometrische Ausgestaltung der Einheit aus Wischarm und Wischeraufnahme respektive der Schnappanformung und der Führungsanformung kann so vorgesehen sein, dass das Spritzgusswerkzeug zur Herstellung lediglich einen weiteren Schieber erfordert, welcher die Hinterschneidung zur Durchführung des Aufnahmesteges erfordert. Somit besteht die Möglichkeit, die Einheit mittels eines Spritzgusswerkzeuges mit lediglich einer Teilungsebene herzustellen.

Vorteilhafterweise erstreckt sich der Aufnahmesteg des Wischers in einer Stegachse, wobei die Erstreckungsrichtung des Wischarms entlang einer Wischerradialachse ausgebildet ist, und wobei sich die Stegachse senkrecht zur Wischerradialachse erstreckt.

Ein weiterer Vorteil zur Erhöhung der übertragbaren Kräfte zwischen dem Wischer und der Wischeraufnahme wird dadurch erreicht, dass zwischen den die Führungsanformungen bildenden Wandungen der Wischeraufnahme Versteifungswandungen eingeformt sind, welche eine Erstreckungsrichtung parallel zur Stegachse aufweisen. Die Versteifungswandungen erstrecken sich daher direkt benachbart zu den Führungsanformungen, um eine erhöhte Festigkeit zu erzielen. Es entsteht eine kastenartige Struktur der Wischeraufnahme, wobei innerhalb der kastenartigen Struktur die Schnapperanformungen eingebracht sind, und die zwei sich gegenüberliegenden Wandungen die Führungsanformungen mit einer erhöhten Steifigkeit bilden.

Weitere, die Erfindung verbessernde Maßnahmen werden nachstehend gemeinsam mit der Beschreibung eines bevorzugten Ausführungsbeispiels der Erfindung anhand der Figuren näher dargestellt.

### Ausführungsbeispiel

Es zeigt:
- Figur 1: eine Scheibenwischvorrichtung mit einem Wischarm, an welchem ein Wischer angeordnet ist, wobei die Aufnahme des Wischers über eine erfindungsgemäße Wischeraufnahme gebildet ist;
- Figur 2: eine Draufsicht der Scheibenwischvorrichtung gemäß Figur 1;
- Figur 3: eine Darstellung des Wischers, in der die Anordnung des Aufnahmesteges gezeigt ist, welcher in die Wischeraufnahme einschnappen kann;
- Figur 4: eine perspektivische Ansicht eines Wischarms mit einer Wischeraufnahme gemäß der vorliegenden Erfindung;
- Figur 4A: eine Detailansicht der Wischeraufnahme gemäß der vorliegenden Erfindung; und
- Figur 4B: eine quergeschnittene Seitenansicht durch die Wischeraufnahme gemäß der in Figur 4A gezeigten Schnittebene.

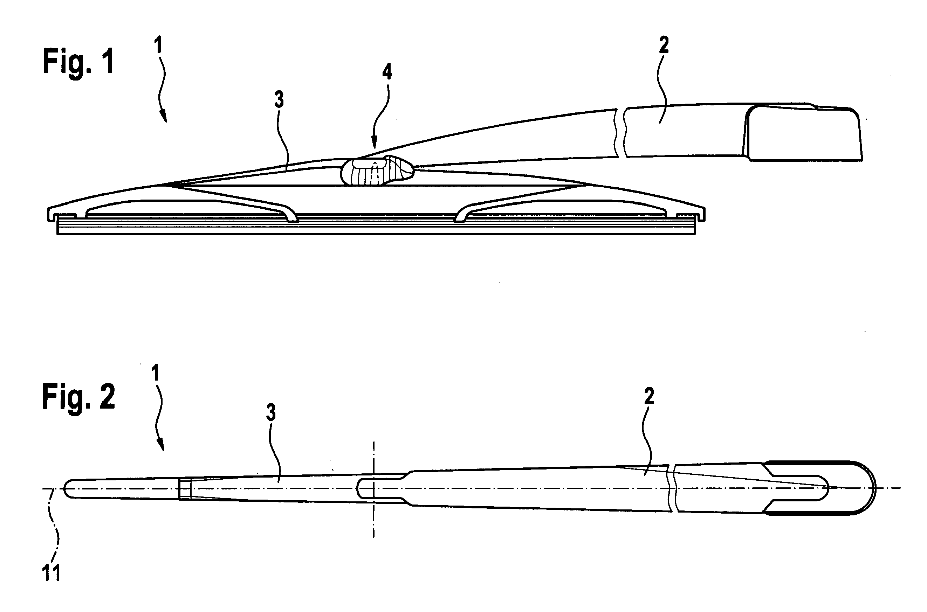

In den Figuren 1 und 2 ist eine Scheibenwischvorrichtung 1 dargestellt, welche einen Wischarm 2 aufweist, der einen Wischer 3 aufnimmt, wobei die Aufnahme über eine Wischeraufnahme 4 gebildet ist. Der Wischer 3 weist eine Längserstreckung in Richtung einer Wischerradialachse 11 auf, so dass der Wischarm 2 eine um eine Pendelachse drehende Pendelbewegung über der Scheibe ausführt. Die Wischerradialachse 11 zeigt dabei in Radialrichtung der Pendelbewegung. Die Aufnahme des Wischers 3 erfolgt über die Wischeraufnahme 4, welche in Figur 1 lediglich schematisch dargestellt ist, und im Folgenden näher erläutert wird. Der Wischer 3 ist als konventioneller Wischer mit einem Metallbügel ausgeführt, wobei die vorliegende Erfindung auch für Wischerausführungen gemäß der sog. Aerotwin- Scheibenwischerausführungen vorgesehen sein kann.

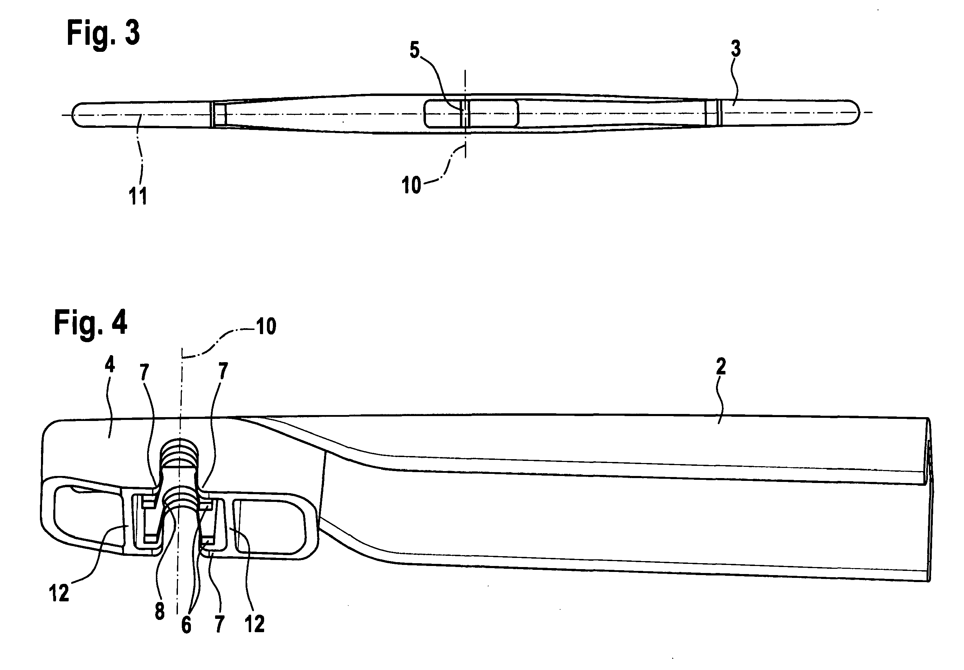

Figur 3 zeigt die Anordnung des Aufnahmesteges 5 innerhalb des Wischers 3, welcher sich in Richtung einer Stegachse 10 erstreckt. Die Stegachse 10 erstreckt sich hingegen senkrecht zur Wischerradialachse 11. Damit kann der Wischer 3 um die Stegachse 10 eine Schwenkbewegung innerhalb eines begrenzten Winkelbereiches ausführen, so dass sich der Wischer 3 der Ebene der zu wischenden Scheibe angleichen kann.

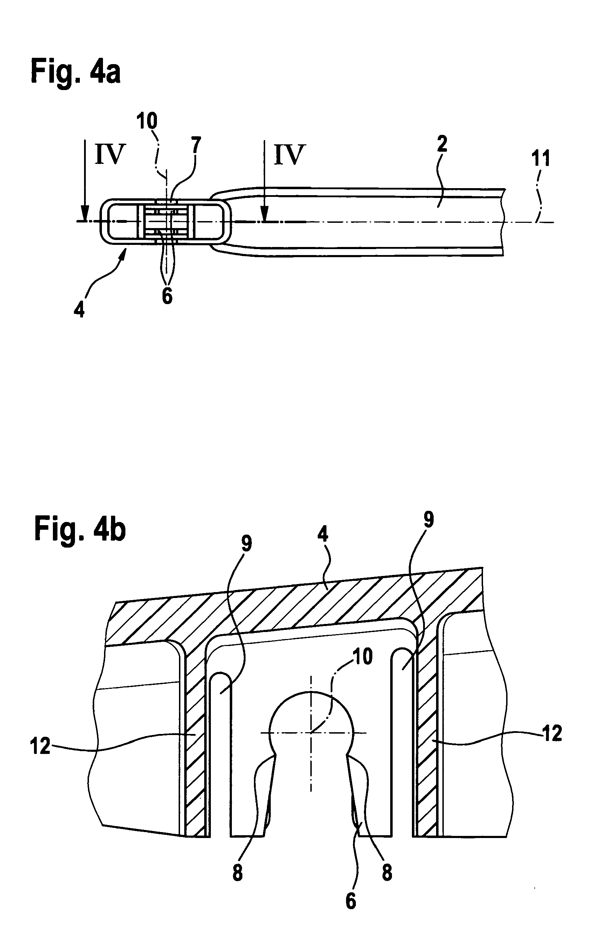

Figur 4 zeigt eine perspektivische Ansicht des erfindungsgemäßen Wischarms 2, an dem endseitig die Wischeraufnahme 4 angeformt ist. Gemäß der Darstellung wird deutlich, dass der Wischarm 2 gemeinsam mit der Wischeraufnahme 4 als einstückiges und materialeinheitliches Bauteil ausgebildet ist, welches vorzugsweise ein Spritzgussbauteil aus einem Kunststoffmaterial ist. Die Wischeraufnahme 4 weist eine rahmen- bzw. kastenartige Grundstruktur auf, durch die sich entlang der Stegachse 10 ein gemeinsamer Durchbruch erstreckt. Der gemeinsame Durchbruch ist durch innerhalb der rahmenartigen Wandung ausgebildete Führungsanformungen 7 und durch zwei innerhalb der Führungsanformungen 7 ausgebildete Schnapperanformungen 6 gebildet. Damit ist die Möglichkeit geschaffen, den Aufnahmesteg des Wischers in den gemeinsamen Durchbruch einzuführen. Deutlich erkennbar ist die geometrische Trennung der Führungsanformungen 7 von den Schnapperanformungen 6, welche als angeformte Geometrien innerhalb der Wischeraufnahme 4 ausgebildet sind. Zwischen den Wandungen, welche die Führungsanformungen 7 bilden, erstrecken sich Versteifungswandungen 12, die parallel zur Erstreckungsrichtung der Stegachse 10 verlaufen. Damit wird eine Erhöhung der Steifigkeit der Wandungen erreicht, um eine verbesserte Krafteinleitung in die Führungsanformungen 7 innerhalb der Wischeraufnahme 4 zu schaffen. Die Fügerichtung des Aufnahmesteges in den gemeinsamen Durchbruch innerhalb der Wischeraufnahme 4 erfolgt von der - in der Bildebene - angeordneten unteren Seite, so dass der Wischarm 2 mit seiner U-förmigen Öffnung in Richtung der zu wischenden Scheibe weist.

Wird nunmehr der Wischer mit dem Aufnahmesteg in die Schnapperanformungen 6 reingedrückt, so können sich diese durch eine elastische Schnappbewegung derart verformen, dass die Hinterschneidungen 8 durch den Aufnahmesteg überwunden werden können und bei einem eingeschnappten Sitz des Aufnahmesteges diesen mit über 180° umschließen. Somit ist eine Wischeraufnahme gebildet, die ein leichtes Einschnappen des Wischers ermöglicht, und dennoch große Kräfte des Wischers auf den Wischarm übertragen kann.

Die Figur 4A zeigt eine weitere Ansicht der Wischeraufnahme 4, in der die Anordnung der Schnapperanformungen 6 zwischen den Führungsanformungen 7 detailliert gezeigt ist. Ferner ist erkennbar, dass sich die Stegachse 10 senkrecht zur Wischerradialachse 11 des Wischarms 2 erstreckt. Die Schnittebene IV-IV ist ein Querschnitt durch die Wischeraufnahme 4, welcher in der Figur 4B gezeigt ist.

Figur 4B zeigt detailliert eine quergeschnittene Seitenansicht der Wischeraufnahme 4, in welcher die schlüssellochartige Geometrie erkennbar ist, welche durch die sich gegenüberstehenden Schnapperanformungen 6 gebildet ist. Die schlüssellochartige Geometrie entsteht durch die hinter den Schnapperanformungen 6 ausgebildeten Hinterschneidungen 8, welche ein Einschnappen des zylinderartigen Aufnahmesteges des Wischers ermöglichen, da sich die Schnapperanfomungen verbiegen können. Ferner sind die Versteifungswandungen 12 in quergeschnittener Weise dargestellt, welche sich zwischen den rahmenartigen Wandungen der Wischeraufnahme 4 erstrecken, wobei benachbart zu den Versteifungswandungen 12 Einschneidungen 9 dargestellt sind, welche einen Freischnitt der Schnapperanformungen 6 erzeugen, so dass diese elastisch beweglich sind.

## Patentansprüche

1. Scheibenwischvorrichtung (1), vorzugsweise für eine Heckscheibe eines Kraftfahrzeugs, mit einem Wischarm (2), welcher eine Wischbewegung über einer Scheibe des Kraftfahrzeugs ausführt und an dem ein Wischer (3) mittels einer Wischeraufnahme (4) aufgenommen ist, die endseitig am Wischarm (2) ausgebildet ist, wobei die Wischeraufnahme (4) mit einem am Wischer (3) ausgebildeten Aufnahmesteg (5) zusammenwirkt,
**dadurch gekennzeichnet, dass** die Wischeraufnahme (4) wenigstens eine Schnapperanformung (6) zum Einschnappen des Aufnahmesteges (5) und von der Schnapperanformung (6) räumlich getrennte Führungsanformungen (7) zur Übertragung der Wischerkräfte auf den Wischarm (2) aufweist, wobei die Wischeraufnahme (4) durch eine die Aufnahmekontur bildende rahmenartige Wandung begrenzt ist und gegenüberliegende taschenartige Durchbrüche aufweist, so dass die rahmenartigen Wandungen im Bereich der taschenartigen Durchbrüche die Führungsanformungen (7) bilden.

2. Scheibenwischvorrichtung (1), nach Anspruch 1,
**dadurch gekennzeichnet, dass** wenigstens eine und bevorzugt zwei Schnappanformungen (6) zwischen den Führungsanformungen (7) angeordnet ist.

3. Scheibenwischvorrichtung (1) nach Anspruch 1 oder 2,
**dadurch gekennzeichnet, dass** die Schnapperanformungen (6) eine mit Hinterschneidungen (8) ausgebildete Aufnahmegeometrie umfasst, so dass der Aufnahmesteg (5) im eingeschnappten Zustand von der Aufnahmegeometrie über 180° umschlossen ist, um einen Halteeffekt zu erzielen.

4. Scheibenwischvorrichtung (1) nach einem der vorgenannten Ansprüche,
**dadurch gekennzeichnet, dass** die Schnapperanformungen (6) einseitig und elastisch beweglich an der Wischeraufnahme (4) angebunden sind, wobei die elastische Beweglichkeit mittels die Schnapperanformungen (6) freigebende Einschneidungen (9) geschaffen ist.

5. Scheibenwischvorrichtung (1) nach einem der vorgenannten Ansprüche,
**dadurch gekennzeichnet, dass** der Wischarm (2) und die Wischeraufnahme (4) einstückig miteinander ausgebildet sind.

6. Scheibenwischvorrichtung (1) nach einem der vorgenannten Ansprüche,
**dadurch gekennzeichnet, dass** die Schnapperanformungen (6) und die Führungsanformungen (7) mit der Wischeraufnahme (4) einstückig ausgebildet sind.

7. Scheibenwischvorrichtung (1) nach einem der vorgenannten Ansprüche,
**dadurch gekennzeichnet, dass** die Einheit aus Wischarm (2), Wischeraufnahme (4), Schnapperanformungen (6) und Führungsanformungen (7) mittels eines Spritzgussverfahrens hergestellt ist.

8. Scheibenwischvorrichtung (1) nach einem der vorgenannten Ansprüche,
**dadurch gekennzeichnet, dass** sich der Aufnahmesteg (5) des Wischers (3) in einer Stegachse (10) erstreckt, und die Erstreckungsrichtung des Wischarms (2) entlang einer Wischerradialachse (11) ausgebildet ist, wobei sich die Stegachse (10) senkrecht zur Wischerradialachse (11) erstreckt.

9. Scheibenwischvorrichtung (1) nach einem der vorgenannten Ansprüche,
**dadurch gekennzeichnet, dass** zwischen den die Führungsanformungen (7) bildenden Wandungen der Wischeraufnahme (4) Versteifungswandungen (12) eingeformt sind, welche eine Erstreckungsrichtung parallel zur Stegachse (10) aufweisen.

## Claims

1. Window wiper device (1), preferably for a rear window of a motor vehicle, with a wiper arm (2) which executes a wiping movement over a window of the motor vehicle and on which a wiper (3) is accommodated by means of a wiper receptacle (4) which is formed on the end side of the wiper arm (2), wherein the wiper receptacle (4) interacts with a mounting web (5) formed on the wiper (3), **characterized in that** the wiper receptacle (4) has at least one snap-on formation (6) for the snapping-in of the mounting web (5), and guide formations (7) which are spatially separated from the snap-on formation (6) and are intended for transmitting the wiper forces to the wiper arm (2), wherein the wiper receptacle (4) is bounded by a frame-like wall forming the receptacle contour and has opposite, pocket-like apertures such that the frame-like walls form the guide formations (7) in the region of the pocket-like apertures.

2. Window wiper device (1) according to Claim 1, **characterized in that** at least one snap-on formation (6) is, and preferably two snap-on formations (6) are, arranged between the guide formations (7).

3. Window wiper device (1) according to Claim 1 or 2, **characterized in that** the snap-on formations (6) comprise a receptacle geometry which is designed with undercuts (8) such that, in the snapped-in state, the mounting web (5) is surrounded by the receptacle geometry over 180° in order to obtain a retaining effect.

4. Window wiper device (1) according to one of the preceding claims, **characterized in that** the snap-on formations (6) are connected to the wiper receptacle (4) on one side and in an elastically movable manner, wherein the elastic movability is provided by means of incisions (9) releasing the snap-on formations (6).

5. Window wiper device (1) according to one of the preceding claims, **characterized in that** the wiper arm (2) and the wiper receptacle (4) are formed integrally with each other.

6. Window wiper device (1) according to one of the preceding claims, **characterized in that** the snap-on formations (6) and the guide formations (7) are formed integrally with the wiper receptacle (4).

7. Window wiper device (1) according to one of the preceding claims, **characterized in that** the unit consisting of wiper arm (2), wiper receptacle (4), snap-on formations (6) and guide formations (7) is produced by means of injection moulding.

8. Window wiper device (1) according to one of the preceding claims, **characterized in that** the mounting web (5) of the wiper (3) extends in a web axis (10), and the direction of extent of the wiper arm (2) is formed along a wiper radial axis (11), wherein the web axis (10) extends perpendicularly to the wiper radial axis (11).

9. Window wiper device (1) according to one of the preceding claims, **characterized in that** stiffening walls (12) which have a direction of extent parallel to the web axis (10) are formed between the walls of the wiper receptacle (4), the walls forming the guide formations (7).

## Revendications

1. Dispositif d'essuie-glace (1), de préférence pour une vitre arrière d'un véhicule automobile, comprenant un bras d'essuie-glace (2), qui effectue un mouvement d'essuyage sur une vitre du véhicule automobile et sur lequel est reçu un essuie-glace (3) au moyen d'un logement d'essuie-glace (4), lequel est réalisé du côté de l'extrémité sur le bras d'essuie-glace (2), le logement d'essuie-glace (4) coopérant avec une nervure de réception (5) réalisée sur l'essuie-glace (3),
**caractérisé en ce que** le logement d'essuie-glace (4) présente au moins une formation d'encliquetage (6) pour l'encliquetage de la nervure de réception (5) et des formations de guidage (7) séparées physiquement de la formation d'encliquetage (6) pour le transfert des forces d'essuyage au bras d'essuie-glace (2), le logement d'essuie-glace (4) étant limité par une paroi de type cadre formant le contour de réception et présentant des orifices en forme de poche opposés, de telle sorte que les parois en forme de cadre forment, dans la région des orifices en forme de poche, les formations de guidage (7).

2. Dispositif d'essuie-glace (1) selon la revendication 1,
**caractérisé en ce qu**'au moins une et de préférence deux formations d'encliquetage (6) sont disposées entre les formations de guidage (7).

3. Dispositif d'essuie-glace (1) selon la revendication 1 ou 2,
**caractérisé en ce que** les formations d'encliquetage (6) comprennent une géométrie de réception réalisée avec des contre-dépouilles (8), de telle sorte que la nervure de réception (5) soit entourée par la géométrie de réception sur 180° dans l'état encliqueté, afin de produire un effet de retenue.

4. Dispositif d'essuie-glace (1) selon l'une quelconque des revendications précédentes,
**caractérisé en ce que** les formations d'encliquetage (6) sont raccordées d'un côté et de manière élastiquement mobile au niveau du logement d'essuie-glace (4), la mobilité élastique étant assurée au moyen d'entailles (9) libérant les formations d'encliquetage (6).

5. Dispositif d'essuie-glace (1) selon l'une quelconque des revendications précédentes,
**caractérisé en ce que** le bras d'essuie-glace (2) et le logement d'essuie-glace (4) sont réalisés d'une seule pièce l'un avec l'autre.

6. Dispositif d'essuie-glace (1) selon l'une quelconque des revendications précédentes,
**caractérisé en ce que** les formations d'encliquetage (6) et les formations de guidage. (7) sont réalisées d'une seule pièce avec le logement d'essuie-glace (4).

7. Dispositif d'essuie-glace (1) selon l'une quelconque des revendications précédentes,
**caractérisé en ce que** l'unité constituée du bras d'essuie-glace (2), du logement d'essuie-glace (4), des formations d'encliquetage (6) et des formations de guidage (7) est réalisée au moyen d'un procédé de moulage par injection.

8. Dispositif d'essuie-glace (1) selon l'une quelconque des revendications précédentes,
**caractérisé en ce que** la nervure de réception (5) de l'essuie-glace (3) s'étend suivant un axe de nervure (10), et la direction d'étendue du bras d'essuie-glace (2) est réalisée le long d'un axe radial d'essuie-glace (11), l'axe de nervure (10) s'étendant perpendiculairement à l'axe radial d'essuie-glace (11).

9. Dispositif d'essuie-glace (1) selon l'une quelconque des revendications précédentes,
**caractérisé en ce qu**'entre les parois formant les formations de guidage (7) du logement d'essuie-glace (4) sont formées des parois de renforcement (12), qui présentent une direction d'étendue parallèle à l'axe de nervure (10).
